# EUROPEAN PATENT APPLICATION

(11) **EP 4 293 059 A1**
(43) Date of publication of application: **20.12.2023**
(21) Application number: 22179643.6
(22) Date of filing: 17.06.2022
(51) Int. Cl.: C08G 18/08, C08G 18/12, C08G 18/32, C08G 18/42, C08G 18/48, C08G 18/76, C09J 175/06, C09J 175/08

(54) **DEBONDABLE COMPACT PU MATERIALS**

(71) Applicant: BASF SE, 67056 Ludwigshafen am Rhein (DE)
(72) Inventor: Cristadoro, Anna Maria, 49448 Lemfoerde (DE)
(74) Representative: Altmann Stößel Dick Patentanwälte PartG mbB

(57) **Abstract**

The present invention is directed to a process for producing a polyurethane having carboxyl groups, said method comprising the steps of providing a polyol composition (PC) essentially consisting of at least one compound (a) bearing at least one carboxyl group or a derivative thereof and at least one functional group comprising active hydrogen reactive towards isocyanate groups; at least one polyol compound (b) having on average 1.5 to 3.5 hydroxyl groups per molecule; optionally one or more further active hydrogen compounds (c) which are different from the compounds (a) and (b); optionally one or more further additives not containing active hydrogens; and then bringing the polyol composition (PC) provided in step (i) into contact with at least one isocyanate composition (IC) comprising at least one isocyanate (11) having on average at least 1.5 isocyanate groups-wherein the NCO group content of the obtained product is in the range of from 0.1 % and 35% by weight. The present invention also relates to the polyurethane obtained in the process as well as the use thereof as an adhesive, as a binder or as a component for the preparation of polyurethanes. According to a further aspect, the present invention relates to a process for preparing a composite comprising at least a first component (C1) and a second component (C2), the process comprising the steps of providing a first component (C1) and a second component (C2), providing a polyurethane obtained or obtainable according to the process of the present invention and bonding the first component and the second component by means of the polyurethane according to the present invention.

## Description

The present invention is directed to a process for producing a polyurethane having carboxyl groups, said process comprising the steps of providing a polyol composition (PC) essentially consisting of at least one compound (a) bearing at least one carboxyl group or a derivative thereof and at least one functional group comprising active hydrogen reactive towards isocyanate groups; at least one polyol compound (b) having on average 1.5 to 3.5 hydroxyl groups per molecule; optionally one or more further active hydrogen compounds (c) which are different from the compounds (a) and (b); optionally one or more further additives not containing active hydrogens; and then bringing the polyol composition (PC) provided in step (i) into contact with at least one isocyanate composition (IC) comprising at least one isocyanate (11) having on average at least 1.5 isocyanate groups-wherein the NCO group content of the obtained product is in the range of from 0.1 % and 35% by weight. The present invention also relates to the polyurethane obtained in the process as well as the use thereof as an adhesive, as a binder or as a component for the preparation of polyurethanes. According to a further aspect, the present invention relates to a process for preparing a composite comprising at least a first component (C1) and a second component (C2), the process comprising the steps of providing a first component (C1) and a second component (C2), providing a polyurethane obtained or obtainable according to the process of the present invention and bonding the first component and the second component by means of the polyurethane according to the present invention

Many consumer goods are made of multiple components of different materials which are bonded to one another by an adhesive. Such bonded articles are difficult to recycle, and it is difficult to re-use the single materials because they have to be de-bonded before re-use.

Consumer good manufactures increasingly demand concepts to increase sustainability by increasing recycle rates of used bonded articles. For example, high performance sport shoes are often based on thermoset polymers such as thermoplastic polyurethanes which are bonded to other materials, for example non-polyurethane materials such as ethylene-vinyl acetate, polyester textiles or synthetic leather. Also separation of cross-linked polymers and subsequent recycling of separated cross-linked foams is possible via glycolysis. The non-polyurethane materials have to be removed after the life cycle of the article by a debonding on demand mechanism before recycling and re-use of the thermoset polymers, in particular the thermoplastic polyurethane.

Similar needs exist in other technical areas to release bonded components of different materials to be able to separately recycle the different materials, for example car seats or instrumental boards, dashboards, meat or cheese food packaging etc. WO 2019/175151 A1 for example describes a method for making thermoplastic polyurethanes from recycled polyurethane materials. This method requires debonding non-polyurethane materials from the polyurethane materials. WO 2018/156689 describes de-bondable adhesives and uses thereof for making and debonding articles of footwear. Debonding is achieved by use of carboxylic acids and salts thereof and by use of microwave irradiation.

There remains a need for improved methods particularly in the footwear industry that facilitate the recycling of shoe components. The problem on which the invention is based is that of providing a method for debonding of bonded articles made of different components, such as for example shoes, to recycle the different components (e.g. upper materials and soles) under mild conditions, with comparatively low energy consumption in short cycle-times. The bonded articles should, under normal storage, use and cleaning conditions, exhibit high resistance to premature debonding. It is a challenge to provide materials with high bond strength during regular use of the articles but which when subjected to stimulation by suitable conditions are easily de-bonded on demand in short time for recycling purposes.

It was an object of the present invention to provide materials which are suitable as adhesives or for bonding two or more components and allow for the debonding of the respective articles obtained. This also allows to reuse the components without complete decomposition of the respective components.

The problem is solved in accordance with the invention by a process for producing a polyurethane having carboxyl groups, said process comprising the steps
(i) providing a polyol composition (PC) essentially consisting of
   a) at least one compound (a) bearing at least one carboxyl group or a derivative thereof and at least one functional group comprising active hydrogen reactive towards isocyanate groups;
   b) at least one polyol compound (b) having on average 1.5 to 3.5 hydroxyl groups per molecule;
   c) optionally one or more further active hydrogen compounds (c) which are different from the compounds (a) and (b);
   d) optionally one or more further additives not containing active hydrogens;
(ii) bringing the polyol composition (PC) provided in step (i) into contact with at least one isocyanate composition (IC) comprising at least one isocyanate (11) having on average at least 1.5 isocyanate groups
wherein the NCO group content of the obtained product is in the range of from 0.1% and 35%

It has been surprisingly found that it is possible according to the present invention to provide stable polyurethanes having carboxyl groups, wherein the NCO group content of the obtained product is in the range of from 0.1% and 35% by weight, in particular in the range of from 0.5% and 30%by weight. The polyurethanes obtained are particularly suitable as binder or adhesives. Preferably, the NCO group content of the obtained product is in the range of from 1% and 25% by weight, in particular in the range of from 1.5 % to 20% by weight.

According to the present invention, the process comprises steps (i) and (ii). According to step (i), a polyol composition (PC) is provided which essentially consists of compounds (a) and (b) and may also contain further compounds.

The polyol composition (PC) comprises at least one compound (a) bearing at least one carboxyl group or a derivative thereof and at least one functional group comprising active hydrogen reactive towards isocyanate groups.

According to the present invention, at least one carboxyl group or a derivative thereof comprises carboxyl groups or salts thereof and also derivatives such as esters or anhydrides which can be converted to the carboxyl group using mild conditions. In the context of the present invention, suitable derivatives might be esters or anhydrides which can be converted to the carboxyl group in a hydrolysis reaction at a temperature in the range of more than 25°C, for example in a range of from 25°C to 60°C.

The term "active hydrogen" refers to compounds having at least one functional group which is capable of reacting with an isocyanate group in an addition reaction, thereby forming a chemical bond between carbon atom of the isocyanate group and one of the atoms of the functional group. These functional groups are also termed "active hydrogen functional group" or "isocyanate reactive group". Typical active hydrogen functional groups of active hydrogen compounds are the hydroxyl group (OH), the mercapto group (SH), the primary amino group (NH2) and also the secondary amino group (NH). The aforementioned functional groups will react with isocyanate groups to form a urethane, an urea or a thiourethane group, respectively.

The polyol composition (PC) further comprises at least one polyol compound (b) having on average 1.5 to 3.5 hydroxyl groups per molecule, preferably on average 1.5 to 3 hydroxyl groups per molecule.

The composition may also comprise further components. The composition may for example comprise one or more further active hydrogen compounds (c) which are different from the compounds (a) and (b). Furthermore, the composition may optionally comprise one or more further additives not containing active hydrogens as component (d).

Compound (a) bears at least one carboxyl group or a derivative thereof and at least one functional group comprising active hydrogen reactive towards isocyanate groups. Suitable compounds are in principle known to the person skilled in the art.

Typically, compound (a) is an aliphatic compound in the context of the present invention and may for example have one or two functional groups comprising active hydrogen reactive towards isocyanate groups, such as for example OH groups, NH groups or SH groups. Compound (a) may also have one OH group and one NH group in the context of the present invention. Preferably, compound (a) has at least one carboxyl group or a derivative thereof and at least one OH group.

According to a further embodiment, the present invention is also directed to the process as disclosed above, wherein the component (a) is selected from the group consisting of compounds having one carboxyl group and one or two functional groups selected from the group consisting of SH, NH and OH groups. According to a further embodiment, the present invention is also directed to the process as disclosed above, wherein the component (a) is selected from the group consisting of compounds having one carboxyl group and two OH groups.

Suitable as compound (a) are for example aliphatic compounds which bear 2 OH groups and at least 1, e.g. 1 or 2 carboxyl groups or derivatives thereof. Their molecular weight is typically in the range of 120 to 400 g/mol. Compound (a) may for example be selected from the group consisting of bis(hydroxymethyl)alkanoic acids, in particular from the group consisting of 2,2-bis(hydroxymethyl)-C2-C8-alkanoic acids, such as 2,2-bis(hydroxymethyl) propanoic acid (hereinafter also DMPA), 2,2-bis(hydroxymethyl)butanoic acid (hereinafter also DMBA), 2,2-bis(hydroxymethyl)pentanoic acid and 2,2-bis(hydroxymethyl)hexanoic acid. In particular, the compound a) is selected from the group consisting of 2,2-bis(hydroxymethyl)propanoic acid and 2,2-bis(hydroxymethyl)butanoic acid and mixtures thereof.

Depending on the molecular weight of the compound (a), the relative amount of the compound (a) in the polyol composition (PC) is generally in the range of 3 to 50% by weight, in particular in the range of 4 to 45% by weight and especially in the range of 5 to 40% by weight, based on the total weight of the mixture provided in step (i).

According to a further embodiment, the present invention is also directed to the process as disclosed above, wherein in the content of component (a) in the polyol composition is in the range of from 3 to 50% by weight.

The mixture provided in step (i) further comprises at least one polyol b) having on average 1.5 to 3.5, in particular on average 1.8 to 3.0 hydroxyl groups per molecule, also termed "average OH functionality". An average OH functionality refers to the average number of hydroxyl groups possessed by the molecules of the polymeric polyol.

The relative amount of the compound (b) in the polyol composition is generally in the range of 50 to 97% by weight, in particular in the range of 60 to 97% by weight or 70 to 97% by weight and especially in the range of 75 to 97% by weight or 80 to 97% by weight, based on the total weight of the mixture provided in step (i).

The OH number of polyol component is generally in the range from 6 to 300 mg KOH/g, in particular in the range from 10 to 200 mg KOH/g, especially in the range of 15 to 180 mg KOH/g, in particular in the range of 35 to 150 mg KOH/g as determined according to EN ISO 4629-1:2016 unless otherwise noted.

Principally, any polyol conventionally used for the preparation of polyurethanes can be used as polyol b). The type of polyol is of minor importance and may depend on the desired purpose of the application. Suitable polyol compounds b) are polyester polyols, including in particular aliphatic polyester polyols and aliphatic aromatic polyester polyols, polyestercarbonate polyols, polyetherester polyols, aliphatic polycarbonate polyols, polyacrylate polyols, polyolefine polyols, aliphatic polyetherols and mixtures thereof. In preferred groups of embodiments, the polyol b) is selected from polyester polyols, in particular aliphatic polyester polyols and aliphatic aromatic polyester polyols, aliphatic polycarbonate polyols, aliphatic polyetherols and mixtures thereof. In particular, the compound b) comprises a polyester polyol and/or an aliphatic polyether polyol as described herein. Especially, the compound b) is selected from polyester polyols, aliphatic polyether polyols and combinations thereof.

According to a further embodiment, the present invention is also directed to the process as disclosed above, wherein the polyol (b) is selected from the group consisting of polyester polyols and polyether polyols.

According to a further embodiment, the present invention is also directed to the process as disclosed above, wherein the polyol (b) has an average molecular weight of less than 10000 g/mol. The molecular weight was determined according to DIN 55672-1:2016-03 and - differing from the DIN norm -using THF as solvent.

Polyesterols suitable as polyol b) are in particular aliphatic polyesterols and aliphatic/aromatic polyesterols, i.e. polyesterols which are based on a dicarboxylic acid component selected from aliphatic dicarboxylic acids, cycloaliphatic dicarboxylic acids, aromatic dicarboxylic acids and combinations and a diol component, selected from aliphatic diols and cycloaliphatic diols and polyetherpolyols.

Suitable aliphatic diols for preparing the polyester polyols generally have usually 2 to 20 C atoms, in particular 3 to 10 C atoms. Examples of aliphatic diols are ethylene glycol, propane-1,2-diol, propane-1,3-diol, butane-1,2-diol, butane-1,3-diol, butane-1,4- diol, butane-2,3-diol, pentane-1,2-diol, pentane-1,3-diol, pentane-1,4-diol, pentane-1,5- diol, pentane-2,3-diol, pentane-2,4-diol, hexane-1,2-diol, hexane-1,3-diol, hexane-1,4- diol, hexane-1,5-diol, hexane-1,6-diol, hexane-2,5-diol, heptane-1,2-diol 1,7-heptanediol, 1,8-octanediol, 1,2-octanediol, 1,9-nonanediol, 1,2-decanediol, 1,10-decanediol, 1,2-dodecanediol, 1,12-dodecanediol, 1,5-hexadiene-3,4-diol, neopentyl glycol (2,2-dimethylpropane- 1,3-diol), 2,2-diethylpropane-1,3-diol, 2-methyl-2-ethylpropane-1,3-diol, 2-methyl-2,4-pentanediol, 2,4-dimethyl-2,4-pentanediol, 2-ethyl-1,3-hexanediol, 2,5-dimethyl-2,5-hexanediol, 2,2,4-trimethyl-1,3-pentanediol, pinacol, diethylene glycol, triethylene glycol, dipropylene glycol, and tripropylene glycol

Suitable cycloaliphatic diols for preparing the polyester polyols generally have usually 4 to 20 C atoms, in particular 5 to 10 C atoms. Examples of cycloaliphatic diols are cyclopentanediol, cyclohexane-1,4-diol, cyclohexane-1,2-dimethanol, cyclohexane-1,3- dimethanol, cyclohexane-1,4-dimethanol and 2,2,4,4-tetramethylcyclobutane-1,3-diol. Also suitable diols for preparing the polyester polyols are polyether diols, in particular polyethylene glycols HO(CH2CH2O)n-H, higher polypropylene glycols HO(CH[CH3]CH2O)n-H, where n is an integer and n ≥ 4, e.g. , 4 to 20, and polyethylene-polypropylene glycols, more particularly those having 4 to 20 repeating units, it being possible for the sequence of the ethylene oxide and propylene oxide units to be blockwise or random, and polytetramethylene glycols, more particularly those having 4 to 20 repeating units, and poly-1,3-propanediols, more particularly those having 4 to 20 repeating units.

Preferred dicarboxylic acids for preparing the polyester polyols are aromatic dicarboxylic acids, such as phthalic acid, isophthalic acid and, terephthalic acid, cycloaliphatic dicarboxylic acids having preferably from 8 to 12 carbon atoms, such as tetrahydrophthalic acid, hexahydrophthalic acid, cyclohexanedicarboxylic acid, and aliphatic dicarboxylic acids having preferably from 3 to 40 carbon atoms, such as malonic acid, succinic acid, 2-methylsuccinic acid, glutaric acid, 2-methylglutaric acid, 3-methylglutaric acid, α-ketoglutaric acid, adipic acid, pimelic acid, azelaic acid, sebacic acid, brassylic acid, fumaric acid, 2,2-dimethylglutaric acid, suberic acid, diglycolic acid, oxaloacetic acid, glutamic acid, aspartic acid, itaconic acid and maleic acid and dimer fatty acids, such as the dimer fatty acid of octadecadienoic acids or dimeric fatty acids obtained by dimerization of other polyunsaturated fatty acids or fatty acid mixtures [CAS 61788-89-4].

The dicarboxylic acid used in preparing the polyester polyols may be the free acids or ester-forming derivatives thereof. Derivatives are understood preferably to be the corresponding anhydrides, monoalkyl and dialkyl esters, preferably mono- and di-C1-C4 alkyl esters, more preferably monomethyl and dimethyl esters, and also the corresponding monoethyl and diethyl esters, and additionally monovinyl and divinyl esters, and also mixed esters, examples being mixed esters with different C1-C4 alkyl components.

Amongst polyester polyols preference is given to polyester polyols based on a diol component selected from the group consisting of butanediol, neopentyl glycol, hexanediol, ethylene glycol, diethylene glycol and mixtures thereof, and a dicarboxylic acid component selected from the group consisting of adipic acid, phthalic acid, isophthalic acid and combinations thereof. Particular preference is given to polyester polyols based on butanediol and/or neopentyl glycol and/or hexanediol with adipic acid and/or phthalic acid and/or isophthalic acid.

Polyester polyols suitable as polyol b) also include polylactones, in particular poly-C4-C12-lactones, especially polycaprolactones (PCL). Polylactones refer to aliphatic polyesters obtainable by ring-opening polymerization of lactones, in particular C4-C12-lactones, especially epsilon-caprolactones (ε-caprolactone). Polycaprolactones have repeating monomer units of the general formula (1) [-O-CHR-(CH2)m-CO-], in which m is 4 to 10, in case of caprolactone m = 4, and R is hydrogen. In the context of the invention, the term polycaprolactone is understood to mean both homopolymers of epsilon-caprolactone and copolymers of epsilon-caprolactone. Suitable copolymers are, for example, copolymers of epsilon-caprolactone with monomers selected from the group consisting of lactic acid, lactide, hydroxyacetic acid and glycolide. The polyester polyols are customary components which are known e.g. from Ullmanns Encyklopädie der technischen Chemie [Ullmann's Encyclopedia of Industrial Chemistry], 4th edition, volume 19, pp. 62 to 65.

Aliphatic polyether polyols suitable as polyol b) are, for example, the polyaddition products of C2-C4-alkylene oxides, such as ethylene oxide, propylene oxide, 1,2-butylene oxide, 2,3-butylene oxide or 2-methylpropylene oxide. Further suitable polymeric polyols b) are aliphatic polyether polyols obtainable by condensation of polyhydric aliphatic alcohols, aliphatic polyether polyols obtained by alkoxylation of aliphatic polyhydric alcohols, amines and amino alcohols. Suitable polyhydric alcohols include ethylene glycol, 1,2-propylene glycol, 1,3-propylene glycol, 1,4-butanediol, neopentyl glycol, 1,6-hexanediol, trimethylolpropane, glycerol, pentaerythritol, triethanolamine (= tris(2-hydroxyethyl)amine), sorbitol or mixtures of these. Suitable polyetherols have generally OH functionalities in the range of 1.5 to 3.0, in particular in the range of 1.8 to 2.5. Suitable polyetherols have preferably OH numbers in the range of 20 to 300 mg KOH/g and in particular in the range of 30 to 250 mg KOH/g. In the context of the present invention, the OH number is measured according to EN ISO 4629-1:2016 unless otherwise noted.

Generally, they have number average molecular weights Mn in the range of 400 to 10.000 g/mol, preferably of 500 to 5.000 g/mol, determined by gel permeation chromatography as described above. Preferred polyether components b) are polyethylene oxide polyols, polypropylene oxide polyols and polytetramethylene oxide polyols (poly-THF) having a molecular weight Mn of 400 to 10.000 g/mol, preferably of 500 to 5.000 g/mol. In this case, the polyether polyols of particularly low molecular weight may be water-soluble in the case of correspondingly high OH contents.

Aliphatic polycarbonate polyols suitable as polyol b) are obtainable by reaction of carbonic acid derivatives, for example diphenyl carbonate, dimethyl carbonate or phosgene, with diols. Useful diols of this kind include, for example, ethylene glycol, propan-1,2- and -1,3-diol, butane-1,3-and 1,4-diol, hexane-1,6-diol, octane-1,8-diol, neopentyl glycol, 1,4-bishydroxymethylcyclohex-ane, 2-methylpropane- 1,3-diol, 2,2,4-trimethylpentane-1,3-diol, dipropylene glycol, polypropylene glycols, dibutylene glycol, polybutylene glycols, but also lactone-modified diols. The diol component preferably contains 40% to 100% by weight of hexane-1,6-diol and/or hexanediol derivatives, preferably those having ether or ester groups as well as terminal OH groups, for example products which are obtained by reaction of 1 mol of hexanediol with at least 1 mol, preferably 1 to 2 mol, of ε-caprolactone or by etherification of hexanediol with itself to give di- or trihexylene glycol. It is also possible to use polyether polycarbonate polyols. Amongst aliphatic polycarbonate polyols preference is given to polycarbonate polyols based on dimethyl carbonate and hexanediol and/or butanediol and/or ε-caprolactone. Very particular preference is given to polycarbonate polyols based on dimethyl carbonate and hexanediol and/or ε-caprolactone. Preferred polycarbonate polyols have a molecular weight Mn of 400 to 10.000 g/mol, preferably of 500 to 5.000 g/mol, determined by gel permeation chromatography as described above.

The polyol composition provided in step (i) may contain one or more further active hydrogen compounds c) which are different from the compounds a) and b). Generally, said active hydrogen compounds c) have a molecular weight of at most 400 g/mol. Suitable active hydrogen compounds c) may have 1, 2, 3 or 3 and preferably have 2 functional groups capable of reacting with the isocyanate group, which are in particular selected from OH, NH2 or SH. In particular, the compounds c) are selected compounds having a molecular weight of at most 400 g/mol and having 2 OH groups pre molecule as sole functional groups.

In particular, the active hydrogen compounds c) are selected from - aliphatic diol compounds having 2 to 20 carbon atoms, for example ethylene glycol, 1,2-propanediol, 1,3-propanediol, 1,1-dimethylethane-1,2-diol, 2-butyl-2- ethyl-1,3-propanediol, 2-ethyl-1,3-propanediol, 2-methyl-1,3-propanediol, neopentyl glycol, hydroxypivalic acid neopentyl glycol ester, 1,2-, 1,3- and 1,4-butanediol, 1,6-hexanediol, 1,10-decanediol, 2-ethyl-1,3-hexanediol, 2,4-diethyloctane-1,3-diol, - cyclic aliphatic diol compounds having 3 to 14 carbon atoms, for example tetramethylcyclobutanediol, 1,2-, 1,3- and 1,4-cyclohexanediol, 1,1-, 1,2-, 1,3- and 1,4-cyclohexanedimethanol, 1,2-, 1,3- or 1,4-cyclooctanediol, norbornanediol, pinanediol, decalindiol, 2,2-bis(4-hydroxycyclohexyl)propane, bis(4-hydroxycyclohexane)isopropylidene; and - aliphatic aminoalcohols having 2 to 20 carbon atoms, such as monoethanolamine, diethanolamine, monopropanolamine, dipropanolamine, N-methyl diethanolamine and N-methyl dipropanolamine.

Particular preference is given to compounds c) which are selected from aliphatic diols having 2 to 12 carbon atoms such as 1,4-butanediol, 1,5-pentanediol and neopentyl glycol.

Preferably, the amount of the active hydrogen compounds c) does not exceed 20% by weight, in particular 10% by weight, especially 5% by weight, based on the total weight of the liquid mixture. If present, the amount of the active hydrogen compounds c) is in the range of 0.1 to 20% by weight, in particular 0.2 to 10% by weight, especially 0.5 to 5% by weight, based on the total weight of the liquid mixture.

Preferably, the polyol composition provided in step (i) contains less than 10% by weight, in particular at most 5% by weight, especially at most 1% by weight or 0% by weight, based on the total weight of the liquid mixture, of compounds having only one active hydrogen group per molecule.

Preferably, the liquid mixture of polyol compounds provided in step (i) contains less 10% of organic compounds which do not have any active hydrogen functional groups and which thus are inert under reaction conditions. These compounds typically have a molecular weight of at most 200 g/mol and are also termed "organic solvent". Examples of organic solvents include, but are not limited to, ketones having 3 to 8 carbon atoms, in particular aliphatic or cycloaliphatic ketones having 3 to 8 carbon atoms, such as acetone, methylethyl ketone, cyclohexanone and isobutylmethyl ketone, and aliphatic or alicyclic ethers, e.g. tetrahydrofurane, dioxane or di-C1-C4-alkyl ethers of mono-, di or trialkylene glycols, such as diethyleneglycol dimethyl ether, triethyleneglycol dimethyl ether, dipropyleneglyocl dimethyl ether, tripropyleneglycol dimethyl ether, esters, e.g. C4-C8 lactones, such as butyrolactone, valerolactone or caprolactone, aliphatic etheresters, e.g. C1-C4 alkoxy-C2-C4 alkyl acetates and propionates, such as methoxypropyl aceate, or carbonates, such as ethylene carbonate, dimethyl carbonate, diethyl carbonate, N-alkyl-2-pyrrolidones, such as N-methyl-2-pyrrolidone, N-ethyl-2- pyrrolidone or higher homologues, and mixtures thereof. In particular, the liquid mixture of polyol compounds provided in step (i) does not contain any organic compound which does not have any active hydrogen functional group or contains less 2% by weight of said compounds, more preferably less 1% by weight of said compounds, in particular less 0.5% by weight of said compounds.

In particular, the polyol composition provided in step (i) consists to at least 90% by weight, in particular at least 95% by weight, especially at least 99% by weight, based on the total weight of the liquid mixture, of the compounds a) and b).

The liquid mixture may contain further additives, such as for example a catalyst which catalyzes the polyurethane formation of the reactive components a), b) and optionally c) contained in the liquid mixture with the isocyanate compound. The amount of catalyst will be typically not exceed 1% by weight, based on the total weight of the liquid mixture and is typically in the range of 0.1 to 1% by weight. Suitable catalysts include, but not limited to, tin compounds such as tin octoate, dibutyltin dilaurate, bismuth neodecanoate or bismuth dioctoate, and tertiary amines such as dimethylbenzylamine, trimethylamine, 1,4-diazabicyclo[2.2.2]octane or any other catalyst known to the person skilled in the art which furthers the formation of urethane groups by the reaction of the hydroxyl groups in compounds a) and b) with the isocyanate groups of the isocyanate compound d). Further catalysts are described in, for example, Houben-Weyl, Methoden der Organischen Chemie, Vol. XIV/2, Thieme-Verlag, Stuttgart 1963, p. 60f. and also Ullmanns Enzyklopädie der Technischen Chemie, 4th edn., Vol. 19 (1981), p. 306.

In step (i) a polyol composition is provided, wherein the compounds are mutually dissolved in each other. In this context, the term "mutually dissolved" means that the liquid mixture is virtually homogeneous and does not have visible inhomogeneity. In other words, the liquid mixture is visually transparent to human eye. For this, step (i) generally comprises mixing the compounds a), b) and optionally c) and d) and heating the thus obtained mixture until the compounds are mutually dissolved in each other. Mixing and heating can be done simultaneously or consecutively. Typically heating requires temperatures of at least 60°C, in particular at least 70°C, especially at least 90°C, e.g. in the range of 60 to 250°C, in particular in the range of 70 to 160°C, especially in the range of 90 to 140°C. The time for achieving mutual dissolution of the components of the liquid mixture may vary and depend on the temperature. A skilled person will easily find out suitable conditions for achieving mutual dissolution of the components of the liquid mixture by routine. The time for achieving mutual dissolution is typically in the range of 5 minutes to 180 minutes. The dissolution may be carried out in a continuous manner or batch-wise. For example, dissolution is carried out in a continuously or batch-wise operated stirred tank reactor heated to the temperature required for complete mutual dissolution of the components of the liquid mixture.

Generally, the polyol composition provided in step (i) does not contain more than traces of water, in order to avoid undesirable side reactions of the isocyanate groups in step (ii). Preferably, the water content of the polyol composition provided in step (i) is less than 0.5% by weight, in particular less than 0.3% by weight, based on the total weight of the polyol composition and may be as low as 0.1% by weight or even lower. The water content of the polyol composition can be determined e.g. by Karl Fischer titration, e.g. according to the protocol of DIN EN ISO 15512:2019.

According to step (ii), the polyol composition (PC) provided in step (i) is brought into contact with at least one isocyanate composition (IC) comprising at least one isocyanate (11) having on average at least 1.5 isocyanate groups.

For the purpose of the present invention, principally any isocyanate having on average at least 1.5 isocyanate (NCO) groups can be employed in step ii). In the context of the present invention, the isocyanate is also referred as"polyisocyanate". That is to say, the at least one isocyanate comprises a plurality of NCO functional groups, e.g. 2, 3 or 4 NCO functional groups, or any value or ranges of values therein. It is to be understood that the at least one polyisocyanate includes both monomeric diisocyanates, i.e. compounds having 2 NCO functional groups isocyanates, and oligomeric forms thereof having on average more than 2 NCO functional groups, e.g. from 2 to 4 NCO functional groups.

The at least one polyisocyanate typically has an NCO content in the range of 10 to 50 wt.-%, preferably in the range of 15 to 45 wt.-%. Determination of the NCO contents on percent by weight is accomplished by standard chemical titration analysis known to those skilled in the art and, therefore, the present invention is not limited by any such methods.

For the purpose of the present invention, the at least one polyisocyanate is preferably selected from the group consisting of aliphatic diisocyanates, alicyclic diisocyanates and aromatic diisocyanates.

According to a further embodiment, the present invention is also directed to the process as disclosed above, wherein the isocyanate (11) is selected from the group consisting of aliphatic diisocyanates, alicyclic diisocyanates and aromatic diisocyanates or aromatic/aliphatic oligomeric or polymeric isocyanates.

The term "aliphatic diisocyanate" refers to molecules having two isocyanate groups attached to an acyclic saturated hydrocarbon radical which typically comprises 4 to 18 carbon atoms. Examples of aliphatic diisocyanates include, but are not limited to, tetramethylene-1,4-diisocyanate, pentamethylene-1,5-diisocyanate, hexamethylene 1,6-diisocyanate, decamethylene diisocyanate, 1,12-dodecane diisocyanate, 2,2,4-trimethyl-hexamethylene diisocyanate, 2,4,4-trimethyl-hexamethylene diisocyanate, 2-methyl-1,5-pentamethylene diisocyanate, etc., and mixtures thereof. Preferred aliphatic diisocyanates are pentamethylene-1,5-diisocyanate, hexamethylene-1,6-diisocyanate, 2,2,4-trimethyl-hexamethylene-1,6-diisocyanate and 2,4,4-trimethyl-hexamethylene-1,6-diisocyanate, and mixtures thereof.

The term "alicyclic diisocyanate" refers to molecules having two isocyanate groups attached to a saturated hydrocarbon radical bearing at least one cyclic moiety. Alicyclic diisocyanate typically comprises 6 to 18 carbon atoms. Examples of alicyclic diisocyanates d2) include, but are not limited to cyclobutane-1,3-diisocyanate, 1,2-, 1,3- and 1,4-cyclohexane diisocyanate, 2,4- and 2,6-diisocyanato-1-methylcyclohexane (= 2,4- and 2,6-hexahydrotoluenediisocyanate), 4,4'- and 2,4'-dicyclohexyldiisocyanates, isocyanatomethylcyclohexane isocyanate, isocyanatoethylcyclohexane isocyanates, bis(isocyanatomethyl)cyclohexane, 4,4'-diisocyanatodicyclohexylmethane (12-MDI), isophorone diisocyanate and mixtures thereof. Preferred alicyclic diisocyanates d2) are 1,2-, 1,3- and 1,4-cyclohexane diisocyanate, 2,4- and 2,6-diisocyanato-1-methylcyclohexane, 4,4'- and 2,4'-dicyclohexyldiisocyanates, bis(isocyanatomethyl)cyclohexane, 4,4'-diisocyanatodicyclohexylmethane (12-MDI), isophorone diisocyanate and mixtures thereof. The isophorone diisocyanate is frequently a mixture, specifically a mixture of the cis and trans isomers, generally in a mass ratio of 60:40 to 80:20, more particularly in a ratio of 70:30 to 75:25, and particularly especially in a ratio of about 75:25.

The term "aromatic diisocyanate", refers to molecules having two isocyanate groups attached directly and/or indirectly to the aromatic ring. Aromatic diisocyanates typically have 8 to 18 carbon atoms. Examples of aromatic diisocyanates include, but are not limited to, 1,2-, 1,3-, and 1,4-phenylene diisocyanates, naphthylene-1, 5-diisocyanate, 2,4- and 2,6-toluene diisocyanate, 2,4'-, 4,4'- and 2,2'-biphenyl diisocyanates, 2,2'-, 2,4'- and 4,4'-diphenylmethane diisocyanate, 1,2-, 1,3- and 1,4-xylylene diisocyanates and m-tetramethylxylyene diisocyanate (TMXDI), and mixtures thereof. Preferred aromatic diisocyanates d2) are 2,4- and 2,6-toluene diisocyanate, 2,4'-, 4,4'- and 2,2'-biphenyl diisocyanates, 2,2'-, 2,4'- and 4,4'-diphenylmethane diisocyanate, 1,2-, 1,3- and 1,4-xylylene diisocyanates and m-tetramethylxylyene diisocyanate (TMXDI) and mixtures thereof.

Preferably, the isocyanate composition comprises at least one of alicyclic diisocyanate compounds and aromatic diisocyanate. In particular, the isocyanate is selected from alicyclic diisocyanate compounds, aromatic diisocyanate compounds and mixtures thereof with aliphatic diisocyanate compounds. More preferably, the isocyanate composition comprises at least one of alicyclic diisocyanate compounds selected from 1,2-, 1,3- and 1,4-cyclohexane diisocyanate, 2,4- and 2,6-diisocyanato-1-methylcyclohexane, 4,4'- and 2,4'-dicyclohexyldiisocyanates, bis(isocyanatomethyl)cyclohexane, 4,4'-diisocyanatodicyclohexylmethane (12-MDI), isophorone diisocyanate and mixtures thereof, in particular selected from 2,4- and 2,6-diisocyanato-1-methylcyclohexane, 4,4'- and 2,4'-dicyclohexyldiisocyanates, bis(isocyanatomethyl)cyclohexane, 4,4'-diisocyanatodicyclohexylmethane (12-MDI), isophorone diisocyanate and mixtures thereof, especially selected from bis(4-isocyanatocyclohexyl)methane, isophorone diisocyanate and mixtures thereof; and aromatic diisocyanate selected from 2,4- and 2,6-toluene diisocyanate, 2,4'-, 4,4'- and 2,2'-biphenyl diisocyanates, 2,2'-, 2,4'- and 4,4'-diphenylmethane diisocyanate, 1,2-, 1,3- and 1,4-xylylene diisocyanates and m-tetramethylxylyene diisocyanate (TMXDI) and mixtures thereof, in particular selected from 2,4- and 2,6-toluene diisocyanate, 2,2'-, 2,4'-and 4,4'-diphenylmethane diisocyanate, 1,2-, 1,3- and 1,4-xylylene diisocyanates and mixtures thereof, especially selected from 2,4- and 2,6-toluene diisocyanate, 4,4'-diisocyanatodiphenylmethane and mixtures thereof.

Preferably, the total amount of the diisocyanates is at least 60 wt.-%, in particular at least 70 wt.-% or 100 wt.-%, based on the total weight of the isocyanate compound d) fed into the reactor.

Especially, the isocyanate compound is selected from toluene diisocyanate, 4,4'-diisocyanatodiphenylmethane, bis(4-isocyanatocyclohexyl)methane, isophorone diisocyanate, mixtures thereof and mixtures thereof with hexamethylene diisocyanate. Preferably, the total amount of the toluene diisocyanate, 4,4'-diisocyanatodiphenylmethane, bis(4-isocyanatocyclohexyl)methane and isophorone diisocyanate is at least 60 wt.-%, in particular at least 70 wt.-% or 100 wt.-%, based on the total weight of the isocyanate compound d) fed into the reactor. In the isocyanate compound d) a small portion of the diisocyanate may be replaced by isocyanate compounds having more than 2 isocyanate groups per molecule. Preferably, the amount of such isocyanate compounds does not exceed 10% of the total amount of isocyanate composition.

The relative amount of the isocyanate composition is preferably chosen such that the molar ratio of NCO groups to isocyanate-reactive groups, i.e. active hydrogen groups present in the polyol composition provided in step (i) may vary depending on the NCO content of the polyurethane to be prepared. Generally, the NCO group content of the obtained product is in the range of from 0.1% and 35% by weight.

The polyol composition (PC) provided in step (i) and the at least one isocyanate are brought into contact under suitable conditions to prepare the polyurethane. It may for example be possible to feed the components into a reactor. Feeding may be carried out either via separate feed lines or as a preformed mixture of the liquid mixture of polyol composition provided in step (i) and the at least one isocyanate. Preferably, the liquid mixture provided in step (i) and the at least one isocyanate are mixed followed by feeding the mixture into the reactor. For mixing, a dynamic mixing element or a static mixing element can be used, with preference given to the latter.

Mixing may also be carried out at elevated temperatures, e.g. at a temperature of at least 50°C, in particular at a temperature in the range of 50 to 150°C.

The reaction conditions for polyurethane formation will depend on the reactivity of the components present in the polyol composition (PC) provided in step (i), the reactivity of the isocyanate and the presence or absence of a catalyst. Generally, the reaction temperature is in the range of 50°C to 150°C, in particular in the range of 60 to 130°C. The residence time in a reactor is typically in the range of 15 min. to 240 min. and in particular in the range of 30 min. to 120 min. A skilled person will find suitable reaction conditions by carrying out routine experiments.

Preferably, step (ii) is carried out at least initially in the absence of an organic solvent having no hydrogen active groups. Therefore, the amount of organic solvent, i.e. organic compounds which do not have any active hydrogen functional group and a molecular weight of at most 200 g/mol in the reactants fed to the reactor is preferably less than 1% by weight, based on the total weight of reactants fed to the reactor, in particular less than 0.1% by weight or zero.

Depending on the molar ratio of NCO groups to isocyanate reactive groups in the compounds fed to the reactor, the obtained polyurethane may still have reactive NCO groups at its termini. The content of NCO groups in the polyurethane may vary and is generally in the range of 0 to 6wt.-%, in particular in the range of 0 to 3 wt.-%, based on the total weight of the polyurethane. If present, the content of NCO groups in the polyurethane is generally in the range of 0.1 to 6 wt.-% or 0.2 to 4 wt.-%, in particular in the range of 0.5 to 3 wt.-%, based on the total weight of the polyurethane. However, the content of NCO groups in the polyurethane may also be less than 0.1 wt.-%, based on the total weight of the polyurethane, or below the detection limit, for example also 0 wt.-%, based on the total weight of the polyurethane.

According to a further aspect, the present invention is also directed to a polyurethane having carboxyl groups or derivatives thereof obtained or obtainable according to the process for preparing a polyurethane as disclosed above.

The carboxyl groups of the polyurethane mainly stem from the polymerized compound a). In other words, the polymerized repeating units compound a) form most of the carboxyl groups in the polyurethane. In particular, at least 90% or all of the carboxyl groups of the polyurethane stem from the polymerized compound a). The remainder of carboxyl groups may result from other ingredients, such as the polyol compound b) or from partial degradation.

According to a further embodiment, the present invention is also directed to the polyurethane as disclosed above, wherein the polyurethane has a carboxyl number in the range of from 0.2 to 50 mg KOH/g according to ISO 2114:2000, where 70 mL acetone is used as solvent and potassium hydrogen phthalate is used as titer.

According to a further embodiment, the present invention is also directed to the polyurethane as disclosed above, wherein the polyurethane has an NCO content in the range of from 0.1% to 35 %.

The polyurethanes obtained according to the present invention can be used as binder or adhesive or can also react with a further polyol component to form higher molecular weight polyurethanes.

According to a further aspect, the present invention therefore is also directed to the use of a polyurethane obtained according to the process as disclosed above as an adhesive, as a binder or as a component for the preparation of polyurethanes.

The polyurethanes may be used for different applications. It is for example possible to apply the polyurethane to a surface and use it as an adhesive. Furthermore, the polyurethane may be mixed with particulates such as small rubber particles or granules or also foamed particles and may react as a binder to form shaped articles from the particulate. Suitable applications may also be flooring applications or wall panels.

According to a further embodiment, the present invention is also directed to the use as disclosed above, wherein the polyurethane is used as an adhesive for the preparation of consumer goods, industrial goods, construction goods, sports equipment, car interior or flooring.

According to a further embodiment, the present invention is also directed to the use as disclosed above, wherein the polyurethane is used as a binder for binding particulates.

According to a further aspect, the present invention is also directed to a process for preparing a composite, wherein a polyurethane obtained according to the process according to the present invention is used as an adhesive, as a binder or as a component for the preparation of polyurethanes.

It has been found that the polyurethane according to the present invention is a good adhesive and can be used as a binder or adhesive in a process to prepare a composite starting from two or more components.

Therefore, according to a further aspect, the present invention is also directed to a process for preparing a composite comprising at least a first component (C1) and a second component (C2), the process comprising the steps
(x) providing a first component (C1) and a second component (C2),
(y) providing a polyurethane obtained or obtainable according to the process as disclosed above or a polyurethane according to the invention,
(z) bonding the first component and the second component by means of the polyurethane provided in step (y).

According to step (x) a first and a second component are provided. It is also possible to combine three or more components according to the present invention. The components may consist of the same material or of different material and may have the same or different dimensions.

Suitable components (C1) and/or (C2) are for example natural- and bio-materials such as wood, cork, sawdust, natural fibers, leather, metal and stones, sand, synthetic materials, polymer-based materials, thermoplastic materials, thermoplastic elastomeric materials, elastomers, duromers, an extruded article, an injection molded article, a pressed article, a foamed article, particle foams, cable sheath, a hose, a profiled element, a drive belt, a fiber material, a nonwoven, a film, a molded part, a sole, a sporting good, an article of footwear, a plug, a housing, or a damping element for the electrical industry, for the automobile industry, for machine construction, for 3D printing, for medicine, or for consumer goods. Preferred bonded articles are consumer goods and industrial goods or goods for construction and transportation, such as for example articles of footwear, parts of articles of footwear, car interior, car seats and instrumental boards, car headliner, dashboards, car batteries, solar panels, wind turbine blades, decor, furniture, isolation, disposable items, packaging, food packaging such as for meat, vegetables or cheese, etc. More preferred are articles of footwear or parts of articles of footwear.

The first component may be made from a thermoplastic polymer. The thermoplastic polymer is preferably a thermoplastic elastomer, more preferably an expanded thermoplastic elastomer. A thermoplastic polymer is a plastic polymer material that becomes pliable or moldable at a certain elevated temperature and solidifies upon cooling. Example of thermoplastic polymers are thermoplastic polyethylene, thermoplastic polypropylene, thermoplastic polyvinyl chloride, thermoplastic polystyrene, thermoplastic polyamides, thermoplastic polyesters, and thermoplastic polyurethanes. Thermoplastic elastomers preferably consist of phase-separated block copolymers and combine the performance benefits of rubber like flexibility and elasticity with the easy processability of thermoplastic polymers.

Suitable materials for the first component are thermoplastic elastomers, for example selected from the group consisting of thermoplastic elastomers, such as thermoplastic olefins, thermoplastic polyamides, thermoplastic polyurethane (TPU), thermoplastic copolyamide (for example thermoplastic copolyetherpolyamide), thermoplastic copolyester elastomer (for example copolyetherester or copolyesterester), styrenic block copolymers (for example styrenebutadiene block copolymer) thermoplastic ethylene vinylacetate and mixtures or blends thereof.

When a thermoplastic polyurethane is used, the thermoplastic polyurethane may be any desired thermoplastic polyurethane known to a person skilled in the art. Thermoplastic polyurethanes and their methods of making have already been extensively described, for example in Gerhard W. Becker and Dietrich Braun, Kunststoffhandbuch, Volume 7, Polyurethane, Carl Hanser Verlag, Munich, Vienna, 1993. The thermoplastic polyurethane is preferably prepared by reacting a mixture of isocyanates with isocyanate-reactive compounds, preferably having a molecular weight of 0.5 kg/mol to 10 kg/mol and optionally chain-extending agents, preferably having a molecular weight of 0.05 kg/mol to 0.5 kg/mol. The thermoplastic polyurethane is preferably prepared by further adding to the mixture at least one chain transfer agent, a catalyst and optionally at least one filler, auxiliary or additive.

According to a further embodiment, the present invention is also directed to the process as disclosed above, wherein the first component (C1) comprises a thermoplastic polymer.

According to a further embodiment, the present invention is also directed to the process as disclosed above, wherein the first component (C1) comprises a foamed thermoplastic polymer.

Expanded polymers, also known as foamed materials, or foams, and particularly expanded polymer particles, also called particle foams, are known and have been extensively described in the literature, for example in Ullmann's "Enzyklopädie der technischen Chemie", 4th edition, volume 20, p. 416 ff. Most preferred materials for the first component are expanded thermoplastic polyurethanes (E-TPU). Suitable E-TPU and methods of their production are described for example in WO 2007/082838, in WO2013/153190 or in WO2015/052265.

Suitable materials for the second or any further component are for example those commonly found in the footwear industry and can be selected for example from the group of materials mentioned for the first component or selected from the group consisting of a crepe rubber, a natural leather, a synthetic leather, a polyurethane (for example a polyurethane foam and/or a thermoplastic polyurethane TPU), a thermoplastic rubber, a styrene butadiene rubber, a polyvinyl acetate, a polyamide (PA), a polyvinyl chloride, a polystyrene, an acrylonitrile butadiene styrene, a polyethylene terephthalate (PET), a polybutylene terephthalate, a textile, a fabric, a thermoplastic polyurethane knit fiber and a combination thereof. Preferred is a shoe upper made of PET, TPU or PA. Most preferred is a shoe upper made of PET.

According to a further embodiment, the present invention is also directed to the process as disclosed above, wherein the second component (C2) comprises a thermoplastic polymer.

A preferred bonded article is an article wherein a first component is an expanded thermoplastic polyurethane and a second component is a material selected from the group consisting of a crepe rubber, a natural leather, a synthetic leather, a polyurethane, such as a foam or compact material or a crosslinked polyurethane, for example a thermoplastic polyurethane, a thermoplastic rubber, a styrene butadiene rubber, a vinyl acetate, a polyamide, a polyvinyl chloride, a polystyrene, an acrylonitrile butadiene styrene, a polyethylene terephthalate, a textile, a fabric, and a combination thereof.

An aspect of the invention is a recyclable article of footwear or portion thereof comprising a first component, a second component, and the inventive polyurethane adhesive adhesively bonding the first component to the second component wherein at least one of the components is made from thermoplastic polyurethane, preferably from an expanded thermoplastic polyurethane;; and the first and second components are debondable by debonding procedure 1) treatment with an aqueous surfactant composition at a temperature from 60 °C to 130 °C, preferably from 60 °C to 100 °C or from 70 °C to 100 °C; and at a pH of 4 to 14, preferably from 6 to 14, in particular from 10 to 14, most preferably 11 to 14 This debonding step can also be assisted/accelerated by using an ultrasonication bath. The first and second components are also debondable by debonding procedure 2) by exposing the article in a water bath to microwaves for a time period of 1 second to 15 minutes, preferentially 15 seconds to 10 minutes. The first component, the second component, or both can be any components commonly found in an article of footwear, and preferably comprise a component selected from the group consisting of an upper, an insole, an outsole, a midsole, and a combination thereof. For example, the polyurethane adhesives can adhesively bond an upper and an outsole, an upper and an insole, a midsole and an outsole, or any other combination of components commonly found in the footwear industry.

Preferably, the first component is a shoe sole made of thermoplastic polyurethane; and the second component is a shoe upper, preferably made of polyethylene terephthalate, polyamide, such as PA6, or cotton. The first component shoe sole preferably contains a midsole made of expanded thermoplastic polyurethane. The adhesive bonds the shoe upper and the shoe sole and/or the midsole. In some aspects, the adhesives bond two sole components such as an outsole and a midsole. In some aspects, the adhesives bond a sole or sole component to an upper (or to a component of the upper). In some aspects, the upper component is a vamp or a quarter. For example, a polyurethane adhesive described herein can be used to bond an upper surface of an outsole to a lower surface of a midsole. This will allow for easier debonding of the outsole and midsole. An adhesive described herein can be used to bond an upper surface of a midsole to a lower surface of an upper. This will allow for easier debonding of the sole from the upper.

For example a shoe can be formed from a shoe sole and an upper, and the shoe sole includes a shoe outsole and a shoe midsole. Each of these components can be bonded using a debondable adhesive described herein. The use of de-bondable adhesives described herein allows for easy debonding, for example for separate recycling of the materials of the upper, the shoe outsole, and/or the shoe midsole.

According to the present invention it is for example possible to combine a woven component and one or more further components, for example foamed beads in one step using the polyurethane according to the present invention as a binder and/or adhesive

According to the present invention it is for example possible to combine one component essentially consisting of a polymer foam with a second component which is essentially a woven structure.

It is also possible to combine several particulate components, for example foamed beads having for example a dimension in the range of 1 mm to 20 mm by using the polyurethane according to the present invention as a binder which essentially covers the particulate components. Furthermore particular components such as rubber crumbs or other small chopped materials (such as cork and wood chips) may be used. Suitable particulate components may for example be obtained by shredding rubber or polymeric materials, for example shoes.

The application of polyurethane adhesive preferably occurs by brushing, spray, doctor blade coating, print or roll coating, followed by a drying step. The adhesive can be applied for example using an automated or machine assisted process, e.g. using an automatic sprayer. Adhesives are coated on one or preferable both substrates.

The method of bonding the first component to the second component can include various surface treatments of the first component, the second component or both, commonly applied with adhesives. The methods of bonding may include treating one or both of the surface of the first component and the surface of the second component prior to applying the polyurethane adhesive.

The methods of bonding the first component to the second component can include applying pressure to ensure a proper level of bonding between the components. For example, the bonding methods can include applying pressure to the first component and the second component for a period of time to adhesively bond the first component and the second component. The pressure can be for example from about 2000 kPa to about 5500 kPa and the period of time can be from about 10 minutes to about 30 minutes but are not limited to it. The methods of bonding can further include applying of heat to adhesively bond the first component and the second component.

The bonded article comprises at least two components which are bonded to one another. The bonded articles can be formed with the use of the polyurethane adhesive by coating one or both components with the adhesive and contacting the components with one another.

The bond strength is preferably from about 5 N/50 mm to material break, more preferably from about 10 N/50 mm to about 200 N/50 mm, most preferably from about 20 N/50 mm to about 150 N/50 mm. The bond strength is measured according to ISO 20344:2011, 5,2. In some cases the bonded materials can undergo, during the debonding test, material damage. In those cases, the measured values according to ISO 20344:2011, 5,2 may also be much lower than 5N/50 mm due to substrate material failure, but not linked to adhesion

According to a further aspect, the present invention is also directed to an article obtained or obtainable by a process as disclosed above.

The article according to the present invention can be used for a variety of applications, such as shoes, in furniture, seating, automotive interior, automotive exterior, medical equipment, industrial applications, consumer goods such as consumer electronics, wearable devices, headphones, speakers, packaging, protection equipment, as cushioning, toys, animal toys, saddles, balls and sports equipment, for example sports mats, sport gloves, or as floor covering and wall paneling.

The article may also be footwear or part of footwear, preferably selected from the group consisting of a shoe, a boot, and a sandal. Suitable shoes are for example an athletic shoe, a tennis shoe, a cross-trainer shoe, a soccer shoe, a children's shoe, a dress shoe, and a casual shoe.

It has been found that the articles according to the present invention can be disassembled using suitable mild conditions which makes them easier to recycle. According to the present invention, it is possible to disassemble the article and obtain the individual components allowing to separate these components and recycle them. This way, mixing of different components can be reduced or avoided. Furthermore, the individual components obtained may also be reused.

According to a further embodiment, the present invention therefore is also directed to the article as disclosed above, wherein the article can be disassembled into components C1 and/or C2.

According to a further embodiment, the present invention is also directed to the article as disclosed above, wherein the article is recyclable. In case the components can be recovered in the recycling process, it is possible that the components can be reused as such. Furthermore, it is also possible to recycle the components in a process which includes a further extrusion step of the thermoplastic elastomer.

According to the present invention it is for example possible to prepare an article by bonding individual components, at least components C1 and C2, to obtain an article. The article can then be disassembled and components C1 and/or C2 can be recovered. Subsequently after suitable separation steps, the components C1 and/o C2 may be reused to prepare an article as set out above.

According to a further embodiment, the present invention is also directed to the article as disclosed above, wherein the recycling of the article results in components (C1) and/or (C2).

The article according to the present invention may be suitable for different applications such as for example consumer goods. According to a further embodiment, the present invention is also directed to the article as disclosed above, wherein the article is a consumer good or part of a consumer good.

It has been found that the articles can be debonded using mild conditions. The debonding can be conducted by treating the article with a solution having a pH in the of from 8 to 14 at a temperature in the range of from 40°C to 150°C or by exposing the article in a water bath to microwaves for a time period of 1 second to 15 minutes, preferentially 15 seconds to 10 minutes.

The at least two components of the bonded article may be debonded by treatment with an aqueous surfactant composition at a temperature from 40C to 150°C, preferably at 60 °C to 130 °C, more preferably from 60 to 100 C or from 70 to 100 °C, and at a pH of 8 to 14, preferably from 9 to 14. If necessary, the bonded article is cut into smaller pieces before debonding. Debonding occurs after treatment of the bonded article (or of pieces thereof) with an aqueous surfactant solution at pH values from 8 to 14 and temperatures from 50 C to 150°C for preferably from 2 to 120 minutes. A preferred method of debonding is a treatment with an aqueous surfactant composition characterized by soaking pieces of the bonded articles in aqueous solutions of surfactants at a pH of from 8 to 14, and temperatures from 50°C to 150°C for up to 60 min while stirring or shaking or ultrsonicating. A suitable apparatus could for example include a mixing and heating device or also a device which allows constant shaking like for example a tumbler or washing machine.

Alternatively, the article can be debonded by exposing the entire article or parts thereof, which may for example be cut before the treatment in a water bath to microwaves, for example for a time period of 1 second to 15 minutes, preferentially 15 seconds to 10 minutes. The microwave irradiation may for example have a frequency of 2 GHz to 3 GHz and/or a power lever of 500W to 1500 W. A suitable temperature for the treatment and the water bath may for example be in the range of from 20°C to 35°C.

According to a further aspect, the present invention is also directed to a process for disassembling an article obtained or obtainable by a process according to the present invention comprising the steps (A) and (B) which are also denoted as debonding procedure 1):
(A) treating the article with a solution having a pH in the range of from 8 to 13 at a temperature in the range of from 50°C to 150C;
(B) recovering component (C1) and/or (C2);
or steps (A') and (B') which are also denoted as debonding procedure 2):
(A') Exposing the article, placed in a water bath, to microwaves
(B') Recovering component (C1) and/or (C2).

A preferred method of debonding comprises treatment of the bonded articles or parts thereof at a temperature of 60 to 100°C at a pH of from 8 to 14 for a time of from 2 to 360 minutes with an aqueous compositions, preferably at a temperature of 80 to 100°C at a pH of from 8 to 14 for a time of from 30 to 180 minutes.

According to an alternative embodiment, the debonding can also be accomplished by a treatment with microwaves. The article can for example be placed in water and then be exposed to microwave radiation. Therefore, according to a further embodiment, the present invention is also directed to a process for disassembling an article obtained or obtainable by a process according to the present invention comprising the steps
(A') exposing the article, placed in a water bath, to microwaves;
(B') recovering component (C1) and/or (C2).

Preferably, no residual adhesive remains on the surfaces of the debonded components. This has the advantage that residual adhesive does not interfere in the recycling of the debonded components. According to the present invention it is also possible that a layer of the residual adhesive remains on the debonded components which may be used in a further process without a recycling step.

Preferably, the bonded article is resistant to debonding at temperatures up to 60°C (without treatment with water, aqueous surfactant composition or any other washing composition) and resistant to debonding by treatment with aqueous surfactant compositions at temperatures up to 40 °C.

Further embodiments of the present invention can be found in the claims and the examples. It will be appreciated that the features of the subject matter/processes/uses according to the invention that are mentioned above and elucidated below are usable not only in the combination specified in each case but also in other combinations without departing from the scope of the invention. For example, the combination of a preferred feature with a particularly preferred feature or of a feature not characterized further with a particularly preferred feature etc. is thus also encompassed implicitly even if this combination is not mentioned explicitly.

Illustrative embodiments of the present invention are listed below, but these do not restrict the present invention. In particular, the present invention also encompasses those embodiments which result from the dependency references and hence combinations specified hereinafter.
1. A process for producing a polyurethane having carboxyl groups, said process comprising
   (i) providing a polyol composition (PC) essentially consisting of
      a) at least one compound (a) bearing at least one carboxyl group or a derivative thereof and at least one functional group comprising active hydrogen reactive towards isocyanate groups;
      b) at least one polyol compound (b) having on average 1.5 to 3.5 hydroxyl groups per molecule;
      c) optionally one or more further active hydrogen compounds (c) which are different from the compounds (a) and (b);
      d) optionally one or more further additives not containing active hydrogens;
   (ii) bringing the polyol composition (PC) provided in step (i) into contact with at least one isocyanate composition (IC) comprising at least one isocyanate (11) having on average at least 1.5 isocyanate groups
   wherein the NCO group content of the obtained product is in the range of from 0.1% and 35% by weight.
2. The process according to embodiment 1, wherein the NCO group content of the obtained product is in the range of from 0.5% and 30% by weight.
3. The process according to embodiment 1 or 2, wherein the component (a) is selected from the group consisting of compounds having one carboxyl group and one or two functional groups selected from the group consisting of SH, NH and OH groups.
4. The process according to any one of embodiments 1 to 3, wherein the component (a) is selected from the group consisting of compounds having one carboxyl group and two OH groups.
5. The process according to any one of embodiments 1 to 4, wherein in the content of component (a) in the polyol composition is in the range of from 3 to 50%.
6. The process according to any one of embodiments 1 to 5, wherein the polyol (b) is selected from the group consisting of polyester polyols and polyether polyols.
7. The process according to any one of embodiments 1 to 6, wherein the polyol (b) has an average molecular weight of less than 10000 g/mol.
8. The process according to any one of embodiments 1 to 7, wherein the isocyanate (11) is selected from the group consisting of aliphatic diisocyanates, alicyclic diisocyanates and aromatic diisocyanates or aromatic/aliphatic oligomeric or polymeric isocyanates.
9. Polyurethane having carboxyl groups or derivatives thereof obtained or obtainable according to a process according to any one of embodiments 1 to 8.
10. The polyurethane according to embodiment 9, wherein the polyurethane has a carboxyl number in the range of from 0.2 to 50 mg KOH/g according to ISO 2114:2000, where 70 mL acetone is used as solvent and potassium hydrogen phthalate is used as titer.
11. The polyurethane according to any one of embodiments 9 to 10, wherein the polyurethane has an NCO content in the range of from 0.5% to 30 %.
12. Use of a polyurethane obtained according to the process according to any one of embodiments 1 to 6 or a polyurethane according to any one of embodiments 9 to 11 as an adhesive, as a binder or as a component for the preparation of polyurethanes.
13. Use according to embodiment 12, wherein the polyurethane is used as an adhesive for the preparation of consumer goods, industrial goods, construction goods, automotive interior and automotive batteries, sports equipment or flooring.
14. Use according to embodiment 12, wherein the polyurethane is used as a binder for binding particulates.
15. A process for preparing a composite, wherein a polyurethane obtained according to the process according to any one of embodiments 1 to 8 or a polyurethane according to any one of embodiments 9 to 12 is used as an adhesive, as a binder or as a component for the preparation of polyurethanes, thus used as isocynate containing component of a two component PU formulation.
16. A process for preparing a composite comprising at least a first component (C1) and a second component (C2), the process comprising the steps
   (x) providing a first component (C1) and a second component (C2),
   (y) providing a polyurethane obtained or obtainable according to the process according to any one of embodiments 1 to 6 or a polyurethane according to any one of embodiments 7 to 10
   (z) bonding the first component and the second component by means of the polyurethane provided in step (y).
17. The process according to embodiment 16, wherein the first component (C1) comprises a thermoplastic polymer.
18. The process according to embodiment 16 or 17, wherein the first component (C1) comprises a foamed thermoplastic polymer.
19. The process according to any one of embodiments 16 to 18, wherein the second component (C2) comprises a thermoplastic polymer.
20. Article obtained or obtainable by a process according to any one of embodiments 16 to 19.
21. Article according to embodiment 20, wherein the article can be disassembled into components (C1) and/or (C2).
22. Article according to embodiment 20 or 21, wherein the article is recyclable.
23. Article according to any one of embodiments 20 to 22, wherein the recycling of the article results in components (C1) and/or (C2).
24. Article according to any one of embodiments 20 to 23, wherein the article is a consumer good or part of a consumer good.
25. Process for disassembling an article obtained or obtainable by a process according to any one of embodiments 16 to 19 comprising the steps (A) and (B) which are also denoted as debonding procedure 1):
   (A) treating the article with a solution having a pH in the range of from 8 to 14 at a temperature in the range of from 50°C to 150°C;
   (B) recovering component (C1) and/or (C2);
   or steps (A') and (B') which are also denoted as debonding procedure 2):
   (A') Exposing the article, placed in a water bath, to microwaves,
   (B') Recovering component (C1) and/or (C2).
26. A process for producing a polyurethane having carboxyl groups, said process comprising
   (i) providing a polyol composition (PC) essentially consisting of
      a) at least one compound (a) bearing at least one carboxyl group or a derivative thereof and at least one functional group comprising active hydrogen reactive towards isocyanate groups;
      b) at least one polyol compound (b) having on average 1.5 to 3.5 hydroxyl groups per molecule;
      c) optionally one or more further active hydrogen compounds (c) which are different from the compounds (a) and (b);
      d) optionally one or more further additives not containing active hydrogens;
   (ii) bringing the polyol composition (PC) provided in step (i) into contact with at least one isocyanate composition (IC) comprising at least one isocyanate (11) having on average at least 1.5 isocyanate groups
   wherein the NCO group content of the obtained product is in the range of from 0.1% and 35% by weight.
27. A process for producing a polyurethane having carboxyl groups, said process comprising
   (i) providing a polyol composition (PC) essentially consisting of
      a) at least one compound (a) bearing at least one carboxyl group or a derivative thereof and at least one functional group comprising active hydrogen reactive towards isocyanate groups;
      b) at least one polyol compound (b) having on average 1.5 to 3.5 hydroxyl groups per molecule;
      c) optionally one or more further active hydrogen compounds (c) which are different from the compounds (a) and (b);
      d) optionally one or more further additives not containing active hydrogens;
   (ii) bringing the polyol composition (PC) provided in step (i) into contact with at least one isocyanate composition (IC) comprising at least one isocyanate (11) having on average at least 1.5 isocyanate groups

   wherein the NCO group content of the obtained product is in the range of from 0.5% and 30% by weight,
   wherein the component (a) is selected from the group consisting of compounds having one carboxyl group and two OH groups.
28. A process for producing a polyurethane having carboxyl groups, said process comprising
   (i) providing a polyol composition (PC) essentially consisting of
      a) at least one compound (a) bearing at least one carboxyl group or a derivative thereof and at least one functional group comprising active hydrogen reactive towards isocyanate groups;
      b) at least one polyol compound (b) having on average 1.5 to 3.5 hydroxyl groups per molecule;
      c) optionally one or more further active hydrogen compounds (c) which are different from the compounds (a) and (b);
      d) optionally one or more further additives not containing active hydrogens;
   (ii) bringing the polyol composition (PC) provided in step (i) into contact with at least one isocyanate composition (IC) comprising at least one isocyanate (11) having on average at least 1.5 isocyanate groups

   wherein the NCO group content of the obtained product is in the range of from 0.5% and 30% by weight,
   wherein the component (a) is selected from the group consisting of compounds having one carboxyl group and two OH groups,
   wherein the polyol (b) is selected from the group consisting of polyester polyols and polyether polyols.
29. Polyurethane having carboxyl groups or derivatives thereof obtained or obtainable according to a process for producing a polyurethane having carboxyl groups, said process comprising
   (i) providing a polyol composition (PC) essentially consisting of
      a) at least one compound (a) bearing at least one carboxyl group or a derivative thereof and at least one functional group comprising active hydrogen reactive towards isocyanate groups;
      b) at least one polyol compound (b) having on average 1.5 to 3.5 hydroxyl groups per molecule;
      c) optionally one or more further active hydrogen compounds (c) which are different from the compounds (a) and (b);
      d) optionally one or more further additives not containing active hydrogens;
   (ii) bringing the polyol composition (PC) provided in step (i) into contact with at least one isocyanate composition (IC) comprising at least one isocyanate (11) having on average at least 1.5 isocyanate groups
   wherein the NCO group content of the obtained product is in the range of from 0.1% and 35% by weight.
30. The polyurethane according to embodiment 29, wherein the polyurethane has a carboxyl number in the range of from 0.2 to 50 mg KOH/g.
31. The polyurethane according to any one of embodiments 29 or 30, wherein the polyurethane has an NCO content in the range of from 0.5% to 30 % by weight.

The invention is further described by examples. The examples relate to practical and in some cases preferred embodiments of the invention that do not limit the scope of the invention.

### EXAMPLES

### 1. The materials used are summarized in table 1.

**Table 1**

| Name | Description |
|---|---|
| Diisocyanate 1 | Mixture of 4,4'-, 2,4'-, and 2,2'-methylene diphenyl diisocyanate, NCO: 33.50% |
| Diisocyanate 2 | Mixture of 4,4'- and 2,4-methylene diphenyl diisocyanate, NCO: 33.50% |
| Diisocyanate 3 | 2,4-Toluene diisocyanate, NCO: 49,25% (purchased from Vencorex) |
| Diisocyanate 4 | 4,4'-Methylene diphenyl diisocyanate, NCO: 33.50% |
| BDO | 1,4-Butanediol OH-number: 1245 mg/g KOH (BASF) |
| Polyol 1 | Poly(tetramethylene oxide) with terminal OH groups and a functionality (F) of F=2.0 having a OH-number of 112,0 mg/g KOH |
| Polyol 2 | Polyether polyol based on propoxylated propylene glycol, OH-number: 104 mg/g KOH, F=1.98, Mw: 1070 g/mol |
| Polyol 3 | Polyether polyol based on propoxylated propylene glycol, OH-number: 55 mg/g KOH, F=1.93, Mw: 1970 g/mol |
| Polyol 4 | Polyether polyol based on propoxylated/Ethoxylated glycerin, OH-number: 170 mg/g KOH, F=3.0, Mw:1000g/mol |
| Polyol 5 | Polyester Polyol based on hexanediol/neopentyl glycol and adipic acid, OH-number: 56 mg/g KOH, F=2.0, Mw: 2000g/mol |
| Polyol 6 | Polyester Polyol based on diethyl glycol and adipic acid, OH-number: 348 mg/g KOH, F=2.0, Mw: 323 g/mol |
| Polyol 7 | Polyester polyol based on (mono) ethylene glycol, glycerin, butanediol and adipic acid, OH-number: 56 mg/g KOH, F:2.12, Mw: 2100g/mol |
| Polyol 8 | Polyester polyol based on diethyl glycol, (mono) ethylene glycol and adipic acid, OH-number: 47 mg/g KOH, F:2.0, Mw: 2400g/mol |
| Polyol 9 | Polyester polyol based on butanediol, (mono) ethylene glycol and adipic acid, OH-number: 38 mg/g KOH, F:2.0, Mw: 3000g/mol |
| Polyol 10 | Polyester polyol based on butanediol, (mono) ethylene glycol and adipic acid, OH-number: 80 mg/g KOH, F:2.0, Mw: 1400g/mol |
| DIBIS | Diglycolbischlorformiate (BASF) |
| DMBA | 2,2-Dimethylolbutyric acid OH-number: 757 mg/g KOH (Sigma-Aldrich) |
| DMPA | 2,2-Dimethylolpropanic acid OH-number: 836 mg/g KOH (Sigma-Aldrich) |
| NPG | Neopentyl glycol OH-number: 1079 mg/g KOH (BASF) |
| Persil | Laundry detergent purchased from Henkel |
| Mucasol | Alkali cleaner purchased from Schülke |
| EPDM | Ethylene propylene diene monomer rubber |

### 2. The synthesis of the prepolymer is exemplary described for the examples 18 and 3 and their reference without COOH groups

### 2.1 Example 18:

Polyol 5 (420 g) was molten at 60 °C. DMBA (25.2 g) and DIBIS (0.06g) were added, and the mixture was heated to 110 °C for 30 minutes to obtain a clear solution. The polyol mixture was cooled to 90 °C and diisocyanate 1 (154.8 g) was added in a single shot. The exothermic behavior of the reaction leads to a temperature increase to 110 °C. The reaction mixture was stirred for additional 2 hours at 95 °C. NCO and viscosity of the obtained product can be found in the summarizing table.

### 2.2 Example 33

Polyol 5 (354.4 g) was molten at 60 °C. NPG (15 g) and DIBIS (0.05 g) were added, and the mixture was heated to 110 °C for 30 minutes to obtain a clear solution. The polyol mixture was cooled to 70 °C and diisocyanate 1 (130.6 g) was added in a single shot. The reaction mixture was stirred for 3 hours at 80 °C. NCO and viscosity of the obtained product can be found in the summarizing table.

### 2.3 Example 3:

DMBA (25.2 g) and DIBIS (0.06g) were added to Polyol 1 (382.2 g) at 60 °C. The mixture was heated to 100 °C for 20 minutes to obtain a clear solution. The polyol mixture was cooled to 80 °C and diisocyanate 1 (192.6 g) was added in a single shot. The exothermic behavior of the reaction leads to a temperature increase to 126 °C. The reaction mixture was stirred for additional 2 hours at 95 °C. NCO and viscosity of the obtained product can be found in the summarizing table.

### 2.4 Example 22:

BDO (17.9 g) and DIBIS (0.06g) were added to Polyol 1 (387 g) and the mixture was heated to 70 °C. diisocyanate 1 (195 g) was added in a single shot. The exothermic behavior of the reaction leads to a temperature increase to 120 °C. The reaction mixture was stirred for additional 2 hours at 80 °C. NCO and viscosity of the obtained product can be found in the summarizing table.

### 2.5 A broad series of prepolymers with different composition has been generated. The examples are summarized in tables 2a to 2h:

**Table 2a**

| | Example 1 | Example 2 | Example 3 | Example 4 | Example 5 | Example 6 |
|---|---|---|---|---|---|---|
| Diisocyanate 1 | 48.8 | 53.6 | 32.1 | 48.9 | 48.1 | 31.2 |
| Polyol 1 | 47.0 | 37.0 | 63.7 | 47.3 | | |
| Polyol 2 | | | | | 47.7 | 64.6 |
| DMBA | 4.2 | 8.4 | 4.2 | | | |
| DMPA | | | | 3.8 | 4.2 | 4.2 |
| NCO % | 9.98 | 9.96 | 3.16 | 10.04 | 10.06 | 2.92 |
| Vise. 70°C mPas | 2163 | 11750 | 103400 | 2332 | 1781 | 54800 |
| Measured (and calculated) acid number mg KOH/g | (16) | (32) | (16) | 14 (16) | (16) | (16) |

**Table 2b**

| | Example 7 | Example 8 | Example 9 | Example 10 | Example 11 | Example 12 |
|---|---|---|---|---|---|---|
| Diisocyanate 1 | 48.2 | 48.9 | 48.2 | 51.6 | 58.4 | 58.2 |
| Polyol 1 | | 47.3 | 48.0 | | 29.0 | |
| Polyol 2 | 48.0 | | | | | 29.2 |
| Polyol 3 | | | | 11.3 | | |
| Polyol 4 | | | | 32.9 | | |
| DMBA | | | | 4.2 | 12.6 | 12.6 |
| DMPA | 3.8 | 3.8 | 3.8 | | | |
| NCO % | 10.00 | 9.90 | 10.03 | 10.16 | 10.08 | 9.85 |
| Vise. 70°C mPas | 1628 | 2714 | 1702 | 9025 | 303000 | 492000 |
| Measured (and calculated) acid number mg KOH/g | 14 (16) | (32) | (16) | (16) | (48) | 44 (48) |

**Table 2c**

| | Example 13 | Example 14 | Example 15 | Example 16 | Example 17 | Example 18 |
|---|---|---|---|---|---|---|
| Diisocyanate 1 | 62.8 | 64.9 | 42.7 | 44.2 | 49.9 | 25.8 |
| Polyol 5 | | | | 51.6 | 41.7 | 70.0 |
| Polyol 6 | 33.0 | 26.7 | | | | |
| Polyol 8 | | | 53.1 | | | |
| DMBA | 4.2 | 8.4 | 4.2 | 4.2 | 8.4 | 4.2 |
| DMPA | | | | | | |
| NCO % | 10.40 | polymerised | | 10.39 | 10.20 | 3.58 |
| Visc. 70°C mPas | 46800 | | | 4860 | 26400 | 72600 |
| Measured (and calculated) acid number mg KOH/g | (16) | (32) | (16) | (16) | 29 (32) | 15 (16) |

**Table 2d**

| | Example 19 | Example 20 | Example 21 | Example 22 | Example 23 | Example 24 |
|---|---|---|---|---|---|---|
| Diisocyanate 1 | | 31.2 | 32.5 | 32.6 | 31.2 | 32.5 |
| Diisocyanate 2 | 25.8 | | | | | |
| Polyol 1 | | | 64.5 | 64.8 | | 64.5 |
| Polyol 2 | | 64.6 | | | 64.6 | |
| Polyol 5 | 70.0 | | | | | |
| NPG | | | 3.0 | | | 3.0 |
| Butandiol-1,4 | | | | 2.6 | | |
| DMBA | 4.2 | 4.2 | | | 4.2 | |
| NCO % | 3.52 | 3.17 | 3.10 | 3.14 | 2.91 | 2.92 |
| Visc. 70°C mPas | 112200 | 72000 | 41000 | 43100 | 55031 | 45400 |
| Measured (and calculated) acid number mg KOH/g | 15 (16) | (16) | 0 | 0 | (16) | 0 |

**Table 2e**

| | Example 25 | Example 26 | Example 27 | Example 28 | Example 29 | Example 30 |
|---|---|---|---|---|---|---|
| Diisocyanate 1 | 32.6 | 25.8 | 26.1 | 29.0 | 26.5 | |
| Diisocyanate 3 | | | | | | 19.1 |
| Polyol 1 | 64.8 | | | | | |
| Polyol 3 | | | | | 29.3 | 76.7 |
| Polyol 5 | | 70.0 | 70.9 | 64.7 | | |
| NPG | | | 3.0 | | | |
| BDO | 2.6 | | | | | |
| DMBA | | 4.2 | | 6.3 | | |
| DMPA | | | | | 4.2 | 4.2 |
| NCO % | 3.22 | 3.07 | 3.61 | 3.34 | 3.58 | 3.83 |
| Visc. 70°C mPas | 41200 | 127400 | 30840 | 174000 | 8241 | 1622 |
| Measured (and calculated) acid number mg KOH/g | 0 | (16) | 0 | (24) | (16) | (16) |

**Table 2f**

| | Example 31 | Example 32 | Example 33 | Example 34 | Example 35 | Example 36 |
|---|---|---|---|---|---|---|
| Diisocyanate 1 | 29.0 | | 26.1 | 29.5 | | |
| Diisocyanate 3 | | 21.0 | | | 23.0 | 15.8 |
| Polyol 3 | 64.7 | 72.7 | | | 68.6 | 80.0 |
| Polyol 5 | | | 70.9 | 66.0 | | |
| NPG | | | 3.0 | 4.5 | | |
| DMBA | 6.3 | 6.3 | | | 8.4 | 4.2 |
| DMPA | | | | | | |
| NCO % | 3.32 | 3.68 | 3.62 | | 3.86 | 1.79 |
| Visc. 70°C mPas | 32550 | 4500 | 37650 | | 12840 | 9000 |
| Measured (and calculated) acid number mg KOH/g | (24) | (24) | 0 | 0 | (32) | (16) |

**Table 2g**

| | Example 37 | Example 38 | Example 39 | Example 40 | Example 41 | Example 42 |
|---|---|---|---|---|---|---|
| Diisocyanate 1 | | 25.8 | 25.8 | 25.1 | 43.6 | 23.0 |
| Diisocyanate 3 | 20.0 | | | | | |
| Polyol 3 | 71.6 | | | | | |
| Polyol 5 | | 70.0 | 70.0 | | | |
| Polyol 7 | | | | 70.7 | 52.2 | |
| Polyol 9 | | | | | | 72.8 |
| DMBA | 8.4 | 4.2 | 4.2 | 4.2 | 4.2 | 4.2 |
| NCO % | 1.97 | 3.17 | 3.20 | 2.79 | 9.97 | 3.26 |
| Visc. 70°C mPas | 82800 | 98600 | 90400 | 234000 | 6200 | 84200 |
| Measured (and calculated) acid number mg KOH/g | (32) | (16) | (16) | (16) | (16) | (16) |

**Table 2h**

| | Example 43 | Example 44 | Example 45 |
|---|---|---|---|
| Diisocyanate 1 | 28.45 | 32.1 | 32.1 |
| Polyol 1 | | 63.7 | 63.7 |
| Polyol 10 | 67.35 | | |
| DMBA | 4.2 | 4.2 | 4.2 |
| NCO % | 2.93 | 2.79 | |
| Visc. 70°C mPas | 119000 | 99600 | 119666 |
| Measured (and calculated) acid number mg KOH/g | (16) | (16) | (16) |

The NCO content in weight-% was determined via back titration of the corresponding sample with an excess of Di-n-butylamin 1M in chlorobenzene with 1 molar hydrochloric acid.

The viscosity was measured with a Brookfield Viscosimeter CV2000+ at 70 °C using a cone plate geometry, spindle 5, with shear rate of 50 s⁻¹.

### 3. Stability of the prepolymer over time

In order to monitor the stability of the prepolymers overtime the viscosity and the NCO% values of selected freshly synthesized prepolymers and of the, under N2 storage six-month old prepolymers, were detected.

Within the error bar of the measurement, the prepolymer are stable. The respective data are summarized in table 3.

**Table 3**

| **Example** | **NCO initial %** | **NCO % before starting adhesion tests (6-month storage)** | **Viscosity initial and after 6 months measured at 70°C** |
|---|---|---|---|
| Example 3 | 3.16 (+/-0.2%) | 2.72 (+/-0.2%) | |
| Example 6 | 2.92 (+/-0,2%) | 2.72 (+/-0.2%) | |
| Example 18 | 3.17 (+/-0.2%) | 3.06 (+/-0.2%) | 98600mPas initial/ 111940 mPas after 6 months |
| Example 19 | 3,52 (+/-0,2%) | 3,21 (+/-0,2%) | |

### 4. Lamination/ Delamination experiments:

As representative example, the prepolymer according to example 18 was laminated on a plate prepared out of ether based expanded thermoplastic polyurethane beads according to WO2013/153190 A1 (Infinergy 230 based on diisocyanate 4, BDO, and Polyol 1, company BASF SE) fused to a plate using steam (Steam Chest Molder from company Kurtz GmbH, K68)(19,5*19,5*1 cm³ length, width, height: l*w*h) with the help of the following coating equipment: Coatmaster 510; 75µm Spiral doctor blade, at a temperature of 85-90° C

Immediately after a piece of cotton canvas (42x20 cm², Standard cotton tissue, Type 10A of Fa. Rocholl) was pressed to the coated plate out of expanded thermoplastic polyurethane named above.

The bonded part was cured for > 2 days at room temperature under a controlled air humidity of 65%.

After that, the plates were cut in about 3*2*1 cm² (l*w*h) pieces and placed in different liquid media, kept at 80°C under stirring, as in table 2, to check the stability of the adhesive during lifetime and the ability of the adhesive to debond under alkali condition (a concentration raw was checked as well).

The adhesion between expanded thermoplastic polyurethane plate from above and fabric was tested by mechanical detachment of the two substrates (peel off by hand).

Possible delamination was checked at regular time interval of 5 minutes. The time for easy delamination by hand is consolidated in Table 4.

**Table 4: tested pre-polymer (example 18) between eTPU and cotton canvas**

| | **Time for debonding in minutes** | **Time for debonding in minutes** |
|---|---|---|
| | Delamination start, but still mechanical stress is necessary for delamination | Very easy delamination |
| water | x (= no debonding) | x |
| Persil 0,2% | x | x |
| Mucasol 10% | x | x |
| Mucasol 100% | x | x |
| NaOH 0,1N | 140 | x |
| NaOH 0,25N | 40 | 60 |
| NaOH 0,5N | 25 | 35 |
| NaOH 1,0N | 25 | 30 |

As shown in table 4, no debonding can be observed when the bonded material is in contact with hot tap water or with detergent/water mixture (highlighted by "x" in the table). On the other hand, debonding is observed after a treatment time of 30 minutes in hot alkali water. Higher alkali concentration allows faster deboning.

The same experiment series were repeated with samples prepares using polyamide 6 (PA6) textile, resulting in the following data set shown in table 5:

**Table 5: tested pre-polymer (example 18) between eTPU and different textiles.**

| | **Time for debonding in minutes in NaOH 1 mol/L** | **Time for debonding in minutes in NaOH 1 mol/L** |
|---|---|---|
| | Delamination starts, | Very easy delamination |
| | but still mechanical stress is necessary for delamination | |
| Cotton Canvas | 25 | 30 |
| PA6 - Textile | 20 | 25 |

### 6. Reference example Lamination/Delamination

The prepolymer containing COOH groups of the delamination experiment 1 is compared in the delamination behavior to a prepolymer of similar composition with no COOH groups (Example 33).

The debonding experiment has been conducted according to the procedure described in the delamination example 1.

**Table 6: different pre-polymers tested between eTPU and cotton canvas**

| | **Time for debonding in minutes in NaOH 0,5 mol/L** | **Time for debonding in minutes in NaOH 0,5 mol/L** |
|---|---|---|
| | Delamination starts, but still mechanical stress is necessary for delamination | Very easy delamination |
| Example 18 | 25 | 35 |
| Example 33 | 55 | 90 |
| Example 24 | x | x |

As one can take from table 6, a carboxyl terminated polyester based prepolymer undergoes much faster delamination in a debonding bath of 0,5 M NaOH.

A polyether based prepolymer does not undergo any delamination.

### 7. Lamination/ Delamination experiments with microwaves

A piece 3*2*1 cm3 (l*w*h) of laminated expanded thermoplastic polyurethane plate/Cotton bonded by using the prepolymer according to example 18 was placed in 100 ml of water.

The sample, in a water bath, was placed in a Microwave Panasonic Inverter NN-SD271S for 90s at 950W.

Afterwards the cotton fabric could be easily peeled off by hand.

### 8. Debondable binder example

EPDM crumbs (29.75g (85%w/w)) were mixed with the prepolymer according to example 18 (15% w/w, 5.25g) were mixed together with the help of a wooden spatula. The composite (7*4*1cm³(l*w*h)) was allowed to cure for at least 2 days at room temperature and controlled air humidity of 65%.

The resulting composite is a mechanically very stable and elastic.

After stirring the composite in alkali water at 80C (3h:45min, NaOH concentration of 1mol/L) the different EPDM crumbs can be easily taken apart again.

Same procedure was repeated with cork, wood-pieces, glass fibers, lose e-TPU beads (Infinergy 230, BASF), lose e-PA beads (produced by the procedure described in WO2021052881 A1), expanded, lose e-PP beads (Neopor, BASF), e-TPO (Argilix-O, JSP), expanded, lose ePS beads (Styropor), and lose e-TPA beads (produced by the procedure described in WO2017220671A1). The obtained parts could be debonded in akali water to obtain the origin material.

Literature cited:
WO 2019/175151 A1
WO 2018/156689 A1
Ullmanns Encyklopädie der technischen Chemie [Ullmann's Encyclopedia of Industrial Chemistry], 4th edition, volume 19, pp. 62 to 65 and p. 306; p. 416 ff.
Houben-Weyl, Methoden der Organischen Chemie, Vol. XIV/2, Thieme-Verlag, Stuttgart 1963, p. 60f.
Gerhard W. Becker and Dietrich Braun, Kunststoffhandbuch, Volume 7, Polyurethane, Carl Hanser Verlag, Munich, Vienna, 1993
WO 2007/082838 A1
WO2013/153190 A1
WO2015/052265 A1

## Claims

1. A process for producing a polyurethane having carboxyl groups, said process comprising the steps
(i) providing a polyol composition (PC) essentially consisting of
a) at least one compound (a) bearing at least one carboxyl group or a derivative thereof and at least one functional group comprising active hydrogen reactive towards isocyanate groups;
b) at least one polyol compound (b) having on average 1.5 to 3.5 hydroxyl groups per molecule;
c) optionally one or more further active hydrogen compounds (c) which are different from the compounds (a) and (b);
d) optionally one or more further additives not containing active hydrogens;
(ii) bringing the polyol composition (PC) provided in step (i) into contact with at least one isocyanate composition (IC) comprising at least one isocyanate (11) having on average at least 1.5 isocyanate groups
wherein the NCO group content of the obtained product is in the range of from 0.1% and 35% by weight.

2. The process according to claim 1, wherein the NCO group content of the obtained product is in the range of from 0.5% and 30% by weight.

3. The process according to claim 1 or 2, wherein the component (a) is selected from the group consisting of compounds having one carboxyl group and one or two functional groups selected from the group consisting of SH, NH and OH groups.

4. The process according to any one of claims 1 to 3, wherein the component (a) is selected from the group consisting of compounds having one carboxyl group and two OH groups.

5. The process according to any one of claims 1 to 4, wherein in the content of component (a) in the polyol composition is in the range of from 3 to 50%.

6. The process according to any one of claims 1 to 5, wherein the polyol (b) is selected from the group consisting of polyester polyols and polyether polyols.

7. The process according to any one of claims 1 to 6, wherein the polyol (b) has an average molecular weight of less than 10000 g/mol.

8. The process according to any one of claims 1 to 7, wherein the isocyanate (11) is selected from the group consisting of aliphatic diisocyanates, alicyclic diisocyanates and aromatic diisocyanates or aromatic/aliphatic oligomeric or polymeric isocyanates.

9. Polyurethane having carboxyl groups or derivatives thereof obtained or obtainable according to a process according to any one of claims 1 to 8.

10. The polyurethane according to claim 9, wherein the polyurethane has a carboxyl number in the range of from 0.2 to 50 mg KOH/g according to ISO 2114:2000, where 70 mL acetone is used as solvent and potassium hydrogen phthalate is used as titer.

11. The polyurethane according to any one of claims 9 to 10, wherein the polyurethane has an NCO content in the range of from 0.1% to 35 % by weight.

12. Use of a polyurethane obtained according to the process according to any one of claims 1 to 6 or a polyurethane according to any one of claims 9 to 11 as an adhesive, as a binder or as a component for the preparation of polyurethanes.

13. Use according to claim 12, wherein the polyurethane is used as an adhesive for the preparation of consumer goods, industrial goods, construction goods, sports equipment or flooring.

14. Use according to claim 12, wherein the polyurethane is used as a binder for binding particulates.

15. A process for preparing a composite, wherein a polyurethane obtained according to the process according to any one of claims 1 to 8 or a polyurethane according to any one of claims 9 to 12 is used as an adhesive, as a binder or as a component for the preparation of polyurethanes.

16. A process for preparing a composite comprising at least a first component (C1) and a second component (C2), the process comprising the steps:
(x) providing a first component (C1) and a second component (C2),
(y) providing a polyurethane obtained or obtainable according to the process according to any one of claims 1 to 6 or a polyurethane according to any one of claims 7 to 10, and
(z) bonding the first component and the second component by means of the polyurethane provided in step (y).

17. The process according to claim 16, wherein the first component (C1) comprises a thermoplastic polymer.

18. The process according to claim 16 or 17, wherein the first component (C1) comprises a foamed thermoplastic polymer.

19. The process according to any one of claims 16 to 18, wherein the second component (C2) comprises a thermoplastic polymer.

20. Article obtained or obtainable by a process according to any one of claims 16 to 19.

21. Article according to claim 20, wherein the article can be disassembled into components (C1) and/or (C2).

22. Article according to claim 20 or 21, wherein the article is recyclable.

23. Article according to any one of claims 20 to 22, wherein the recycling of the article results in components (C1) and/or (C2).

24. Article according to any one of claims 20 to 23, wherein the article is a consumer good or part of a consumer good.

25. Process for disassembling an article obtained or obtainable by a process according to any one of claims 16 to 19 comprising the steps:
(A) treating the article with a solution having a pH in the range of from 8 to 13 at a temperature in the range of from 50°C to 150°C;
(B) recovering component (C1) and/or (C2).

26. Process for disassembling an article obtained or obtainable by a process according to any one of claims 16 to 19 comprising the steps:
(A') exposing the article, placed in a water bath, to microwaves;
(B') recovering component (C1) and/or (C2).
